(19) Europäisches Patentamt
European Patent Office
Office européen des brevets

(11) EP 0 870 780 B1

(12) # FASCICULE DE BREVET EUROPEEN

(45) Date de publication et mention de la délivrance du brevet:
**15.09.2004 Bulletin 2004/38**

(51) Int Cl.[7]: **C08F 20/12**, C08F 4/46

(21) Numéro de dépôt: **98400750.0**

(22) Date de dépôt: **31.03.1998**

(54) **Système d'amorçage comprenant un ligand hétérocylique pour la (co)polymérisation anionique de monomères (méth)acryliques, et procédé de polymérisation l'utilisant**

Heterocyclischen Ligand enthaltendes Initiatorsystem für die anionische (Co)Polymerisation von (Meth)Acryl Monomeren und Polymerisationsverfahren unter Verwendung desselben

Initiator system comprising an heterocyclic ligand for the anionic (co)polymerisation of (meth)acrylic monomers and polymerisation process using it

(84) Etats contractants désignés:
**BE CH DE ES FR GB IT LI NL SE**

(30) Priorité: **10.04.1997 FR 9704470**

(43) Date de publication de la demande:
**14.10.1998 Bulletin 1998/42**

(73) Titulaire: **Atofina**
**92800 Puteaux (FR)**

(72) Inventeurs:
- **Müller, Axel H.E.**
**65193 Wiesbaden (DE)**
- **Maurer, Andreas R.**
**61276 Weilrod (DE)**
- **Navarro, Christophe**
**64520 Bidache (FR)**

(74) Mandataire: **Ohresser, François**
**Atofina,**
**Département Propriété Industrielle,**
**4-8, cours Michelet,**
**La Défense 10**
**92091 Paris La Défense Cedex (FR)**

(56) Documents cités:
**EP-A- 0 002 159**
**EP-A- 0 524 054**
**US-A- 4 351 924**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 870 780 B1

Printed by Jouve, 75001 PARIS (FR)

## Description

La présente invention concerne un système d'amorçage pour la polymérisation anionique de monomères (méth)acryliques et, éventuellement, de monomères à insaturation(s) éthylénique(s) copolymérisables avec ces monomères (méth)acryliques, pour obtenir des homopolymères, des copolymères séquencés ou statiques et des copolymères en toile comprenant des branches formées d'au moins une séquence (méth)acrylique liée à un coeur ou nodule formé à partir d'un composé multifonctionnel (par exemple un agent désactivant ou un monomère conduisant à un polymère réticulé ou non).

La polymérisation anionique des monomères (méth)acryliques est difficile à contrôler par suite des réactions secondaires du monomère avec l'amorceur et/ou les extrémités des chaînes anioniques en croissance et par des réactions de terminaison et de transfert de chaîne.

Par exemple, EP 0 002159 A décrit un procédé de polymérisation anionique basé sur un système d'amorçage consistant en une association moléculaire d'un amidure alcalin avec le sel du même métal d'un composé hydroxylé et en absence de solvant. Or il est connu que les amidures alcalins sont des nucléophiles forts, conduisant lors de la polymérisation des (méth)acrylates à des réactions secondaires dues à l'attaque préférentielle, par les anions des groupes esters ou de l'atome d'hydrogène en alpha des (méth)acrylates. Cela se traduit par l'obtention d'oligomères ou de polymères avec des rendements non quantitatifs et/ou des indices de polymolécularité élevés.

La polymérisation anionique présente, cependant, de l'intérêt en ce sens que si elle est réalisée dans des conditions contrôlées avec soin, on peut obtenir des polymères ayant une structure bien définie.

Des recherches ont été entreprises pour mieux contrôler la polymérisation de monomères (méth)acryliques et éviter ainsi les réactions secondaires.

Ainsi, dans la demande de brevet européen EP-A-524054, est décrite la polymérisation anionique de monomères (méth)acryliques en présence d'un système d'amorçage comprenant un amorceur monofonctionnel ou difonctionnel et un ligand formé par un alcoxyalcoolate de métal alcalin. Avec ce procédé, la polymérisation est bien contrôlée, mais surtout à basse température.

On recherche toujours un système d'amorçage qui permet une polymérisation anionique bien contrôlée et réalisable dans des conditions facilement industrialisables, moins coûteuses, et particulièrement à des températures plus proches de la température ambiante.

Le système d'amorçage, selon l'invention, pour la polymérisation de monomères (méth)acryliques et, éventuellement, de monomères à insaturation(s) éthylénique(s) copolymérisables avec ces monomères (méth)acryliques, comprend au moins un amorceur, à l'exception des amidures de métal alcalin, et au moins un alcoolate de formule ROM (I) dans laquelle :

- M représente un métal alcalin
- R représente un groupement

$$Q\text{-}R^1\text{-}(OR^2\text{-})_m$$

dans lequel :

- Q représente un hétérocycle à 5 ou 6 chaînons comportant 1 ou 2 atomes d'oxygène comme seul(s) hétéroatome(s), non substitué ou substitué par un groupe alkyle ayant de 1 à 8 atomes de carbone, un cycloalkyle en $C_5$ - $C_8$ ou substitué par/ou condensé à un hétérocycle ayant de 5 à 8 chaînons contenant 1 ou 2 atomes hétéroatomes ;
- $R^1$ et $R^2$, identiques ou différents, représentent, chacun, un groupe alkylène en $C_1$-$C_4$ linéaire ou ramifié, $R^1$ étant lié à l'hétérocycle Q en $\alpha$ d'un atome d'oxygène,
- m est égal à 0, 1, 2 ou 3.

Dans la formule I du ligand, le groupement Q, est de préférence un hétérocycle hydrogéné et, en particulier, peut représenter un groupe tétrahydrofuranyl-2-, 5-méthyltétrahydrofuranyl-2-, tétrahydropyranyl-2-, 1,3-dioxolanyl-2-, 1,3-dioxolanyl-5-, 1,3-dioxanyl-2-, 1,3-dioxanyl-6-, 1,4-dioxanyl-2-, 1,4-dioxaspiro [4,5] décan-2-yl-, 1,7-dioxaspiro [5,5] undécan-2-yl, 1, 5, 7, 11-tétraoxaspiro [5,5]-undécan-2-yl.

$R^1$ peut être, par exemple, un groupe méthylène, éthylène, propylène, butylène, isopropylène, de préférence méthylène.

$R^2$ peut représenter, par exemple, un groupe méthylène, éthylène, propylène, butylène, isopropylène, de préférence éthylène.

m est avantageusement égal à 0, 1 ou 2.

M représente de préférence le lithium.

Q peut être substitué par un ou condensé à un hétérocycle contenant 1 ou 2 hétéroatomes identiques ou

différents, comme l'oxygène, l'azote et le soufre.

Un ligand particulièrement utile est le tétrahydrofuranyl-2-méthoxylate ou -2-éthoxylate de lithium.

L'amorceur du système d'amorçage selon l'invention peut être tout amorceur mono- ou di-fonctionnel pour la polymérisation anionique.

L'amorceur monofonctionnel peut être choisi notamment parmi les composés de formule : $(R')_p$ - M' (II) dans laquelle :

M' désigne un métal alcalin ou alcalino-terreux (valence p de 1 ou 2) ; et
R' désigne un radical alkyle à chaîne droite ou ramifiée contenant 2 à 8 atomes de carbone, ou un radical aryle à un ou plusieurs cycles, éventuellement substitué(s) ou bien un radical alcényle en $C_2$-$C_6$ substitué par un groupe aryle ou alkylaryle, ou bien un radical alkyle linéaire ou ramifié contenant 1 à 8 atomes de carbone substitué par au moins un groupe phényle ou un radical alkylaryle dans lequel le groupe alkyle a de 1 à 8 atomes de carbone.

De tels amorceurs monofonctionnels sont, par exemple, le sec.-butyllithium, le n-butyllithium, le fluorényllithium, l'alphaméthylstyryllithium, le 1,1-diphénylhexyllithium, le diphénylméthyllithium ou -sodium ou -potassium et le 1,1-diphényl-3-méthylpentyllithium.

L'amorceur monofonctionnel peut être aussi des $\alpha$-lithioisobutyrates.

Les amorceurs bifonctionnels peuvent être de formule (III)

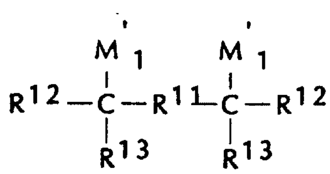

(III)

dans laquelle :

- $M'_1$ est un métal alcalin ; et
- $R^{11}$ représente un radical organique divalent, aliphatique, cycloaliphatique, aromatique ou comportant au moins un groupement cycloaliphatique ou aromatique, $R^{11}$ pouvant comporter des substituants ; et
- $R^{12}$ et $R^{13}$ représentent, chacun, indépendamment, un radical organique monovalent, aliphatique, cycloaliphatique, aromatique ou comportant au moins un groupement cycloaliphatique ou aromatique, $R^{12}$ et $R^{13}$ pouvant comporter des substituants.

L'amorceur difonctionnel peut être choisi notamment parmi les composés tels que le 1,1,4,4-tétraphényl-1,4-dilithio-butane, le 1,1,4,4-tétraphényl-1,4-disodiobutane.

On peut aussi utiliser des amorceurs difonctionnels tels que des précurseurs d'amorceurs comme le naphtalène lithium, le naphtalène sodium, le naphtalène potassium et leurs homologues. On peut aussi utiliser le produit de réaction de deux équivalents d'amorceur organomonolithié (tel que le ter.butyllithium) sur le 1,3-diisopropénylbenzène.

L'amorceur peut être aussi un composé silylé. Monofonctionnel, il peut répondre à la formule suivante :

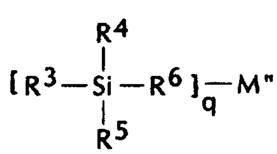

(IV)

dans laquelle :

- $R^3$, $R^4$, $R^5$ représentent, chacun, indépendamment, un radical alkyle, linéaire ou ramifié, contenant 1 à 8 atomes de carbone;
- $R^6$ représente un radical alkylène linéaire ou ramifié, contenant 1 à 8 atomes de carbone ;
- M" désigne un métal alcalin ou alcalino-terreux (valence q de 1 ou 2).

L'amorceur silylé peut également être bifonctionnel , étant alors choisi notamment parmi les composés de formule (V) :

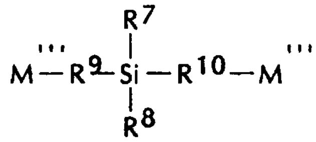

(V)

dans laquelle :

- $R^7$ et $R^8$ représentent, chacun, indépendamment, un radical alkyle, linéaire ou ramifié, contenant 1 à 8 atomes de carbone ;
- $R^9$ et $R^{10}$ représentent, chacun, indépendamment, un radical alkylène, linéaire ou ramifié, contenant 1 à 8 atomes de carbone; et
- M''' désigne un métal alcalin.

Dans les formules (IV) ou (V) ci-dessus, on préfère que $R^3$, $R^4$, R5, $R^7$ et $R^8$ représentent, chacun, un radical alkyle ayant 1 à 4 atomes de carbone, tout particulièrement méthyle, que $R^6$, $R^9$ et $R^{10}$ représentent, chacun, un radical alkylène ayant 1 ou 2 atomes de carbone et, particulièrement le radical méthylène et que M'' et M''' représentent, chacun, le lithium.

Le rapport molaire alcoolate/amorceur dans le système d'amorçage selon la présente invention peut varier dans des limites très larges. La quantité d'alcoolate doit être suffisante pour permettre la formation d'un complexe avec le centre actif de polymérisation et, ainsi, stabiliser ce dernier. La quantité d'alcoolate dépend de l'amorceur choisi et du ou des monomères à polymériser. Le rapport molaire alcoolate /amorceur selon l'invention est généralement compris entre 1 et 20 ; pour l'obtention de meilleurs résultats, ce rapport est compris, de préférence, entre 2 et 10.

La présente invention concerne aussi un procédé de polymérisation anionique de monomères (méth)acryliques et, éventuellement de monomères à insaturation(s) éthylénique(s) copolymérisables avec ces monomères (méth) acryliques, en présence d'un système d'amorçage défini précédemment.

La polymérisation, réalisée en présence du système d'amorçage selon l'invention, a lieu, de préférence, en l'absence d'humidité et d'oxygène, et en présence d'au moins un solvant non protique, choisi, de préférence, parmi le benzène, le toluène, l'éthylbenzène, le tétrahydrofuranne, le diglyme, le tétraglyme, l'orthoterphényle, le biphényle, la décaline, la tétraline ou leurs mélanges ; on peut utiliser avantageusement le toluène ou l'éthylbenzène. On peut aussi utiliser un mélange toluène-tétrahydrofuranne ou éthylbenzène-tétrahydrofuranne pouvant contenir jusqu'à 10 % en volume de tétrahydrofuranne.

La température de polymérisation peut varier entre -100°C et + 100°C environ et, de préférence, elle est inférieure à -20°C environ pour les acrylates et à +30°C pour les méthacrylates.

Le système d'amorçage selon l'invention permet une conversion totale des monomères en une durée inférieure, généralement très inférieure, à 30 minutes, cette durée étant dépendante de la température. Dans le cas de la polymérisation des acrylates, cette durée peut être très inférieure à une seconde.

La polymérisation selon l'invention est possible en réacteurs de type batch ou tubulaire, mais elle n'est pas limitée à ceux-ci.

Elle peut avoir lieu, en continu, comme décrit dans la demande de brevet EP-A-749987 et, dans ce cas, le ou les monomère(s) à polymériser et le système d'amorçage sont d'abord mélangés dans un micromélangeur (par exemple, micromélangeur de type cyclone ou à jets tangentiels, du type à jets d'impacts), puis le mélange est injecté dans le réacteur de (co)polymérisation. La durée du séjour du ou des monomères et du système d'amorçage dans le micromélangeur est inférieure au temps de (co)polymérisation.

La polymérisation peut avoir lieu dans des conditions adiabatiques. Ceci est intéressant puisqu'il n'y a pas à fournir d'énergie au cours de la polymérisation.

Pour obtenir les (co)polymères à partir des (co)polymères vivants résultant de la polymérisation anionique selon l'invention, on désactive ces derniers par réaction avec une source de protons consistant notamment en un alcool, de l'eau ou un acide protonique. Ensuite, on peut éventuellement conduire une transestérification ou une hydrolyse en milieu acide du (co)polymère obtenu.

Par le procédé selon l'invention, on peut former des homopolymères, des copolymères statistiques ou des copolymères séquencés ou des polymères en étoile comprenant des branches formées de (co)polymères séquencés ou statistiques.

Les monomères que l'on peut (co)polymériser par le procédé de l'invention sont choisis notamment dans le groupe comprenant les monomères (méth)acryliques.

Le terme "monomère (méth)acrylique", tel qu'employé ci-dessus, signifie un monomère choisi parmi les (méth)acrylates des formules respectivement :

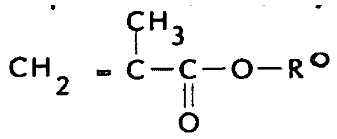 et 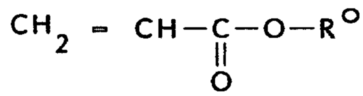

dans lesquelles R° est choisi parmi les radicaux alkyle en $C_1$-$C_{18}$, linéaires ou ramifiés, primaires, secondaires ou tertiaires, cycloalkyle en $C_5$-$C_{18}$, alcoxyalkyle et alkylthioalkyle dans lesquels les groupes alkyle, linéaires ou ramifiés, ont de 1 à 8 atomes de carbone, aryle et arylalkyle, ces radicaux étant éventuellement substitués par au moins un atome de fluor et/ou au moins un groupe hydroxyle après protection de ce groupe hydroxyle ; les (méth)acrylates de glycidyle, de norbornyle, d'isobornyle, les mono- et di-(alkyl en $C_1$-$C_{18}$)-(méth)acrylamides.

Comme exemples de méthacrylates utiles, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle. Le monomère méthacrylique préféré est le méthacrylate de méthyle.

Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

Les monomères que l'on peut (co)polymériser avec les monomères (méth)acryliques sont des monomères à insaturation(s) éthylénique(s) tels que les monomères vinylaromatiques, éventuellement halogenés ou substitués, les monomères diéniques, les monomères vinylidéniques, les monomères oléfiniques, les vinyl-2- et vinyl-4-pyridines, vinylsilanes, vinylaldéhydes, vinylcétones, vinylsulfoxydes et les alkylcyanoacrylates. On peut aussi utiliser des monomères hétérocycliques.

Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'ethoxy-4-styrène, le diméthyl-3,4-styrène, le tert.-butyl-3-styrène et le vinyl-1-naphtalène.

Par monomère diénique, on entend un diène choisi parmi les diènes linéaires ou cycliques, conjugués ou non-conjugués comme par exemple le butadiène, le 2,3-diméthyl-butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylène-2-norbornène, le 5-(2-propényl)-2-norbornène, le 5-(5-hexényl)-2-norbornène.

Comme monomères oléfiniques, on peut citer l'éthylène.

En particulier, le système d'amorçage selon l'invention permet de préparer des polyméthacrylates de méthyle (PMMA) ayant une masse molaire moyenne en nombre ($\overline{Mn}$) comprise entre 200 et $10^6$ g/mole et un indice de polymolécularité Ip ($\overline{Mw}/\overline{Mn}$) compris entre 1,05 et 2,6. Les PMMA peuvent avoir des pourcentages en triades syndiotactiques supérieurs ou égaux à 70 % même dans un solvant apolaire ou majoritairement apolaire, ce qui leur confère une température de transition vitreuse d'environ 130°C, et donc une plus haute résistance à la chaleur que des PMMA préparés par polymérisation radicalaire.

Il est aussi possible d'obtenir, avec des rendements élevés, des polymères d'acrylate d'alkyle ayant une masse molaire moyenne en nombre ($\overline{Mn}$) comprise entre 500 et 500 000 g/mole et un Ip compris entre 1,05 et 2,6. Ces homopolymères sont vivants, ce qui permet de préparer des copolymères séquencés.

Les exemples suivants illustrent la présente invention sans toutefois en limiter la portée. Dans les exemples, on a utilisé les abréviations suivantes :

- MMA et PMMA = méthacrylate de méthyle et poly(méthacrylate de méthyle) ;
- TMSM-Li = triméthylsilylméthyllithium ;
- THFM-Li = tétrahydrofuranyl-2- méthoxylate de lithium ;
- DPE = 1,1-diphényléthylène ;
- BuLi = n-butyllithium ;
- DPH-Li = 1,1-diphénylhexyllithium ;
- THF = tétrahydrofuranne ;
- $[A]_o$ = concentration initiale de l'amorceur (TMSM-Li) ;
- $[A']_o$ = concentration initiale de l'amorceur (DPH-Li) ;

- [L] = concentration du ligand ;
- $[M]_O$ = concentration intiale du monomère ;
- $M_O$ = masse molaire du monomère ;
- $\overline{Mn}_{théorique} = M_o \times \frac{[M]_o}{[A]_o} \times Xp$
- efficacité de l'amorceur (f) = $\frac{\overline{Mn}_{théorique}}{\overline{Mn}_{exp\ érimentale}}$

Les masses molaires et les Ip ($\overline{Mw}/\overline{Mn}$) sont basés sur des mesures de GPC, comme indiqué à l'exemple 1. Dans cet exemple, figure aussi le mode de calcul de la conversion Xp du monomère.

**<u>Exemples 1 (a à h)</u> : Poly(méthacrylate de méthyle)**

Le méthacrylate de méthyle est polymérisé dans un réacteur tubulaire, en l'absence d'humidité et d'oxygène, en utilisant le triméthylsilylméthyllithium (TMSM-Li) comme amorceur (A) en présence de tétrahydrofuranyl-2-méthoxylate de lithium (THFM-Li) comme ligand (L).
On évite toutes traces d'impuretés (humidité, oxygène, ...) dans le système ; pour cela, tous les réactifs ont été purifiés comme décrit ci-dessous, dégazés et maintenus sous azote pur.
Le méthacrylate de méthyle (MMA) est tout d'abord séché sur hydrure de calcium ($CaH_2$) et distillé sous pression réduite (45 mbar) en présence de 3-(3,5-di-tert.-butyl-4-hydroxyphényl)propionate d'octadécyle en tant qu'inhibiteur de polymérisation non volatil. Après dégazage, il est agité pendant au moins une nuit sur $CaH_2$ refroidi par un bain de glace, dégazé à nouveau et conservé à -18°C. Ensuite, il est distillé à partir du $CaH_2$ juste avant utilisation.
On a utilisé du TMSM-Li 1,0 molaire dans le pentane.
Le toluène et le THF ont été fractionnés, puis portés à reflux sur du potassium et introduits dans un ballon à fond rond relié à une canalisation sous vide. Après dégazage, le mélange a été agité avec 5 ppm de benzophénone sur un alliage sodium/potassium (1/3) jusqu'à ce que la solution devienne bleue, puis il a été distillé à nouveau juste avant utilisation.
Le n-octane est utilisé comme étalon interne pour l'analyse par chromatographie en phase gazeuse du monomère résiduel. Il est dégazé, séché par agitation sur un alliage sodium/potassium (1/3) avec 5 ppm de benzophénone et distillé dans une ampoule équipée d'une valve en Téflon®.
On a ajouté 1,2 ml de tétrahydrofuranyl-2-méthanol et 1 goutte de 1,1-diphényléthylène (DPE) à 35 ml de toluène et on les a refroidi à 0°C. Puis on a ajouté, goutte à goutte, 8,2 ml de n-butyllithium (1,6 M dans l'hexane) au mélange sous azote pur jusqu'à ce qu'un léger rouge subsiste.
Dans une boîte à gants, dans une première ampoule, on ajoute 0,5 ml d'amorceur (A) (TMSM-Li) et 7,1 ml de ligand (L) (THFM-Li) à 250 ml de toluène ($[A]_o = 10^{-3}$ mole/l ; $[L]/[A]_o = 4$). On remplit une deuxième ampoule, équipée d'une valve en Téflon®, avec 21,4 ml de MMA, 8,6 ml de n-octane et 470 ml de toluène ($[M]_o = 0,2$ mole/l). Une troisième ampoule, munie d'une valve en Téflon® est remplie d'agent de terminaison, c'est-à-dire une solution de méthanol acidifiée par de l'acide acétique (0,5 % v/v).
Ces trois ampoules ont été reliées à un récipient de stockage d'un réacteur tubulaire. Les parties principales du réacteur consistent en trois burettes contenant les réactifs précédents. Un moteur actionne simultanément les pistons des trois burettes et entraîne les solutions à travers une chambre de mélange (temps de mélange < 1 ms) et un réacteur tubulaire. Avant d'atteindre la chambre de mélange (mélangeur à quatre jets avec entrée tangentielle, volume de 1 µl), les solutions sont amenées à la température de réaction désirée par écoulement à travers 5 m de capillaires dans un bain thermostaté. Ensuite, les solutions (système d'amorçage et monomère) s'écoulent dans le réacteur tubulaire. On peut choisir les temps de séjour (compris entre $2 \times 10^{-3}$ et 20 secondes) dans le réacteur tubulaire en changeant la longueur "l" (4,4 à 500 cm) et le diamètre "d" (0,5 à 2 mm) des tubes ou le débit (1,3 à 5 ml/s). A l'extrémité du réacteur tubulaire, un tube de terminaison brusque $T_Q$ est connecté, lequel mélange la solution de méthanol acidifiée par de l'acide acétique (0,5 % v/v) (agent de terminaison) à la solution réactionnelle. La température dans la tuyère de mélange $T_M$ et celle dans le tube de terminaison brusque $T_Q$ peuvent être déterminées par l'utilisation de thermocouples Philips Thermocoax® (diamètre externe de 0,5 mm).
La température $T_{eff}$ est liée par la relation $T_{eff} = T_M + 0,55 (T_Q - T_M)$ avec $T_M$ = température du mélange et $T_Q$ = température de terminaison. Cette température indique la température de polymérisation.
Les conditions expérimentales exactes et les résultats pour le système décrit sont donnés dans le tableau 1 suivant.

## Tableau 1

| Ex | l (cm) | débit ($cm^3.s^{-1}$) | d (mm) | t (ms) | Conversion $x_p$ | $T_M$ (°C) | $T_Q$ (°C) | $T_{eff}$* (°C) | $\overline{Mn}$ calc | $\overline{Mn}$ exp | $\overline{Mw}/\overline{Mn}$ |
|---|---|---|---|---|---|---|---|---|---|---|---|
| 1a | 16 | 3,99 | 1 | 31,5 | 0,16 | -22,0 | -18,5 | -20,1 | 3 200 | 9 500 | < 1,20 |
| 1b | 32 | 3,99 | 1 | 63,0 | 0,26 | -22,0 | -19,0 | -20,4 | 5 200 | 16 800 | 1,10 |
| 1c | 32 | 2,41 | 1 | 104,2 | 0,37 | -21,0 | -17,0 | -18,8 | 7 300 | 19 200 | 1,13 |
| 1d | 64 | 3,55 | 1 | 141,4 | 0,47 | -23,0 | -17,5 | -20,0 | 9 500 | 29 500 | 1,08 |
| 1e | 64 | 2,41 | 1 | 208,5 | 0,61 | -24,0 | -16,5 | -19,9 | 12 200 | 36 700 | 1,08 |
| 1f | 128 | 3,55 | 1 | 282,7 | 0,69 | -21,0 | -14,0 | -17,2 | 13 800 | 46 000 | 1,08 |
| 1g | 300 | 4,43 | 1 | 532,1 | 0,97 | -20,0 | -12,0 | -15,6 | 19 400 | 54 000 | 1,07 |
| 1h | 300 | 2,41 | 1 | 977,3 | 1,00 | -22,0 | -13,0 | -17,1 | 20 000 | 53 000 | 1,06 |

*$T_{eff} = T_M + 0,55\ (T_Q - T_M)$ avec $T_M$ = température de mélange et $T_Q$ = température de terminaison

$\overline{Mn}$ en g/mole

Immédiatement après échantillonage, on injecte 1 µl des solutions de polymère brut dans un appareil de chromatographie en phase gazeuse de type Fisons GC 8160, colonne capillaire DB-1, longueur 30 m, diamètre interne : 0,53 mm, épaisseur de film 1,5 µm, FID. Le rapport des surfaces de pic de monomère résiduel et de n-octane, respectivement $F_{monomère}$ et $F_{octane}$, conduit à la conversion $X_p$ du monomère, à l'instant t :

$$Xp = 1 - \frac{\left[\frac{F_{monomère}}{F_{octane}}\right]_t}{\left[\frac{F_{monomère}}{F_{octane}}\right]_o}$$

Le reste des solutions brutes est traité afin d'obtenir un polymère pur. Le premier stade de ce traitement consiste en l'évaporation du (ou des) solvant(s) et du monomère résiduel dans un évaporateur rotatif à 30°C. Ensuite, les produits restants sont dissous dans le benzène et filtrés à travers un papier filtre. Finalement, la solution de benzène contenant le polymère est lyophilisée et un gel est obtenu.

Pour les mesures de GPC, 10 mg de polymère sont dissous dans 5 ml de THF contenant 20 ppm de toluène comme étalon interne. Pour corriger le retrait ou la dilatation du gel ou des changements du débit, pour chaque échantillon, le volume d'élution a dû être corrigé en relation avec le pic de l'étalon interne.

$$V_{e,corr} = V_{e,exp} \frac{V_{e,cal^{tol}}}{V_{e,exp^{tol}}}$$

$V_{e,\ corr}$ = volume d'élution corrigé
$V_{e,\ exp}$ = volume d'élution expérimental
$V_{e,\ cal_{tol}}$ = volume d'élution du toluène de l'étalonnage
$V_{e,exp_{tol}}$ = volume d'élution du toluène de l'échantillon.

On injecte 100 µl des solutions échantillons sur une combinaison de colonnes (solvant : THF, débit ; 60 ml/h ; 2 colonnes 60 cm 5 µ PSS-DV-Gel, 10nm) à la température ambiante (Détecteurs UV Jasco-Uvidec 100 III et indice de réfraction Bischoff RI-Detektor 8110). L'ensemble de colonnes est étalonné avec des étalons de PMMA.

Les éluogrammes de GPC des polymères obtenus montrent un pic de masse molaire élevé étroit.

L'efficacité (f) de l'amorceur, à $T_{eff} \simeq$ - 20°C, a été déterminée, à partir de la pente de la courbe du degré de polymérisation moyen en nombre en fonction de la conversion, comme étant de 0,35.

__Exemple 2__

On opère comme indiqué à l'exemple 1, mais on utilise 0,5 ml d'amorceur (A) (TMSM-Li) et 3,1 ml de ligand (L) (THFM-Li) dans 250 ml de toluène ($[A]_o = 10^{-3}$ mole/l ; $[L]/[A]_o = 2$).

Les conditions expérimentales exactes et les résultats sont donnés au tableau 2 suivant.

L'efficacité (f) de l'amorceur, à $T_{eff} \simeq$ - 20°C, a été déterminée à partir de la pente de la courbe donnant le degré de polymérisation moyen en nombre en fonction de la conversion comme étant de f = 0,10.

La microstructure du polymère obtenu est analysée par $RMN^1H$. Le taux de triades syndiotactiques est de 81 %.

**Tableau 2**

| l (cm) | débit ($cm^3.s^{-1}$) | d (mm) | t (ms) | Conversion $x_p$ | $T_M$ (°C) | $T_Q$ (°C) | $T_{eff}$* (°C) | $\overline{Mn}$ calc | $\overline{Mn}$ exp | $\overline{Mw}$ / $\overline{Mn}$ |
|---|---|---|---|---|---|---|---|---|---|---|
| 32 | 3,99 | 1 | 63,0 | 0,08 | -22,5 | -19,5 | -20,9 | 1 700 | 20 500 | 1,17 |
| 32 | 2,41 | 1 | 104,2 | 0,13 | -24,0 | -19,0 | -21,3 | 2 600 | 29 100 | 1,19 |
| 64 | 3,55 | 1 | 141,4 | 0,17 | -22,0 | -18,5 | -20,1 | 3 500 | 39 000 | 1,12 |
| 64 | 2,41 | 1 | 208,5 | 0,24 | -24,0 | -18,5 | -21,0 | 4 800 | 50 200 | 1,12 |
| 128 | 3,55 | 1 | 282,7 | 0,31 | -22,0 | -17,0 | -19,3 | 6 100 | 67 100 | 1,13 |
| 128 | 2,41 | 1 | 417,0 | 0,40 | -24,0 | -16,5 | -19,9 | 8 100 | 77 000 | 1,19 |

*$T_{eff} = T_M + 0,55\ (T_Q - T_M)$ avec $T_M$ = température de mélange et $T_Q$ = température de terminaison

$\overline{Mn}$ en g/mole

**Exemples 3 à 5 :**

On polymérise, comme à l'exemple 1h, du méthacrylate de méthyle (MMA) ($[M]_o$ = 0,2 mole/l) en présence d'une composition d'amorçage comprenant, comme ligand, du tétrahydrofuranyl-2-méthoxylate de lithium (THFM-Li) (L) dans du toluène comme solvant. Dans ces exemples, l'amorceur (A') est du 1,1-diphénylhexyllithium (DPHLi) en solution dans un solvant apolaire ($10^{-3}$ mole/l) au lieu du triméthylsilyllithium (TMSM-Li). Les conditions expérimentales et les résultats sont donnés au tableau 3.

Tableau 3

| Ex | [L]/[A']o | Conversion $X_p$ | $T_M$ °C | $T_{eff}$ °C | $\overline{Mn}$ calc | $\overline{Mn}$ exp | $\overline{Mw}/\overline{Mn}$ | Efficacité |
|---|---|---|---|---|---|---|---|---|
| 3 | 3 | 1,00 | - 23 | - 20 | 20 000 | 95 200 | < 1.2 | 0,21 |
| 4 | 4 | 1,00 | - 23 | - 20 | 20 000 | 37 700 | <1.10 | 0,53 |
| 5 | 5 | 1,00 | - 23 | - 20 | 20 000 | 38 100 | <1.05 | 0,53 |

**Exemples 6, 7 et 8 :**

On opère comme aux exemples 4 et 5, c'est-à-dire que le système d'amorçage comprend du THFM-Li (L) comme ligand et du DPHLi (A') comme amorceur. Le milieu solvant utilisé est un mélange de toluène et de THF. Les conditions expérimentales et les résultats sont indiqués au tableau 4.

Tableau 4

| Ex | [L]/[A']o | Toluène/ THF (v/v) | Conversion $X_p$ | TM °C | $T_{eff}$ °C | $\overline{Mn}$ calc | $\overline{Mn}$ exp | $\overline{Mw}/\overline{Mn}$ | Efficacité |
|---|---|---|---|---|---|---|---|---|---|
| 6 | 4 | 97,5/2,5 | 1,00 | - 21 | - 20 | 20 000 | 37 700 | <1.3 | 0,53 |
| 7 | 4 | 95/5 | 1,00 | - 22 | - 20 | 20 000 | 37 700 | <1.3 | 0,53 |
| 8 | 5 | 95/5 | 1,00 | - 20 | - 20 | 20 000 | 37 000 | <1.2 | 0,54 |

Si l'on compare les résultats obtenus aux exemples 4 à 8, on peut noter que la présence de THF ne modifie pas l'efficacité (déterminée à Teff $\simeq$ - 20°C).

**Exemples 9 et 10**

On polymérise, comme à l'exemple 1 h, du méthacrylate de méthyle (MMA) en présence de TMSM-Li (A) et de THFM-Li (L).

Le rapport molaire $[L]/[A]_o$ est égal, respectivement, à 4 et 6. Le milieu solvant utilisé est un mélange de toluène et de THF.

Les conditions expérimentales et les résultats sont indiqués au tableau 5.

Tableau 5

| Ex | $[L]/[A]_o$ | Toluène/ THF v/v | Conversion $X_p$ | TM °C | $T_{eff}$ °C | $\overline{Mn}$ calc | $\overline{Mn}$ exp | $\overline{Mw}/\overline{Mn}$ | Efficacité |
|---|---|---|---|---|---|---|---|---|---|
| 9 | 4 | 95/5 | 1,00 | - 24 | - 20 | 20 000 | 50 000 | < 1.7 | 0,40 |
| 10 | 6 | 95/5 | 1,00 | - 22 | - 20 | 20 000 | 40 000 | < 1.3 | 0,50 |

**Revendications**

1. Système d'amorçage pour la polymérisation anionique d'au moins un monomère (méth)acrylique et éventuellement de monomère(s) à insaturation(s) éthylénique(s) copolymérisable(s) avec ce(s) monomère(s), comprenant au moins un amorceur à l'exception des amidures de métal alcalin et au moins un alcoolate de formule ROM (I)
   dans laquelle :

- M représente un métal alcalin et
- R représente un groupement

$$Q—R^1—(OR^2—)_m$$

dans lequel :

- Q représente un hétérocycle à 5 ou 6 chaînons comportant 1 ou 2 atomes d'oxygène comme seul(s) hétéroatome(s), non substitué ou substitué par un groupe alkyle ayant de 1 à 8 atomes de carbone, un cycloalkyle en $C_5$ - $C_8$ ou substitué par ou condensé à un hétérocycle ayant de 5 à 8 chaînons contenant 1 ou 2 hétéroatomes ;
- $R^1$ et $R^2$, identiques ou différents, représentent, chacun, un groupe alkylène en $C_1$-$C_4$ linéaire ou ramifié, $R^1$ étant lié à l'hétérocycle Q en $\alpha$ d'un atome d'oxygène,
- m est égal à 0, 1, 2 ou 3, **caractérisé en ce que** le rapport molaire alcoolate/amorceur est compris entre 1 et 20.

**2.** Système d'amorcage selon la revendication 1 dans lequel le ligand a la formule I dans laquelle :

- Q est choisi dans le groupe formé par le tétrahydrofuranyl-2-, 5-méthyltétrahydrofuranyl-2-, tétrahydropyranyl-2-, 1,3-dioxolanyl-2-, 1,3-dioxolanyl-5-, 1,3-dioxanyl-2-, 1,3-dioxanyl-6-, 1,4-dioxanyl-2-, 1,4-dioxaspiro [4,5] décan-2-yl-, 1,7-dioxaspiro [5,5] undécan-2-yl, 1, 5, 7, 11-tétraoxaspiro [5,5]-undécan-2-yl,
- $R^1$ et $R^2$ sont des groupes méthylène, éthylène, butylène, propylène ou isopropylène,
- m est égal à 0, 1 ou 2,
- M est le lithium.

**3.** Système d'amorçage selon la revendication 2 dans lequel le ligand est le tétrahydrofuranyl-2-méthoxylate ou -2-éthoxylate de lithium.

**4.** Système d'amorçage selon l'une des revendications 1 à 3 dans lequel l'amorceur est monofonctionnel et répond à la formule (R') p - M' (II) dans laquelle :

- M' désigne un métal alcalin ou alcalino-terreux (valence p de 1 ou 2) ; et
- R' désigne un radical alkyle à chaîne droite ou ramifiée contenant 2 à 8 atomes de carbone, ou un radical aryle à un ou plusieurs cycles, éventuellement substitué(s) ou bien un radical alcényle en $C_2$-$C_6$ substitué par un groupe aryle ou alkylaryle, ou bien un radical alkyle linéaire ou ramifié contenant 1 à 8 atomes de carbone substitué par au moins un groupe phényle ou bien un radical alkylaryle dans lequel le groupe alkyle a de 1 à 8 atomes de carbone.

**5.** Système d'amorçage selon la revendication 4 dans lequel l'amorceur monofonctionnel est choisi parmi le sec. butyllithium, le n-butyllithium, le fluorényllithium, l'alphaméthylstyryl lithium, le 1,1-diphénylhexyllithium, le diphénylméthyllithium ou -sodium ou -potassium et le 1,1-diphényl-3-méthylpentyllithium.

**6.** Système d'amorçage selon l'une des revendications 1 à 3 dans lequel l'amorçeur est monofonctionnel et est un composé parmi les $\alpha$-lithioisobutyrate.

**7.** Système d'amorçage selon l'une des revendications 1 à 3, **caractérisé en ce que** l'amorceur est difonctionnel et répond à la formule III :

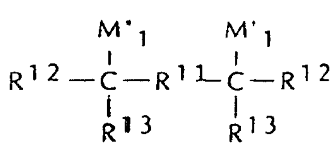

(III)

dans laquelle :

- $M'_1$ est un métal alcalin ; et

- $R^{11}$ représente un radical organique divalent, aliphatique, cycloaliphatique, aromatique ou comportant au moins un groupement cycloaliphatique ou aromatique, $R^{11}$ pouvant comporter des substituants.
- $R^{12}$ et $R^{13}$ représentent, chacun, indépendamment, un radical organique monovalent, aliphatique, cycloaliphatique, aromatique ou comportant au moins un groupement cycloaliphatique ou aromatique, $R^{12}$ et $R^{13}$ pouvant comporter des substituants.

**8.** Système d'amorçage selon la revendication 7 dans lequel l'amorceur est choisi dans le groupe formé par le 1,1,4,4-tétraphényl-1,4-dilithio-butane, le 1,1,4,4-tétraphényl-1,4-disodiobutane.

**9.** Système d'amorçage selon l'une des revendications 1 à 3 dans lequel l'amorceur est difonctionnel et choisi parmi les précurseurs d'amorceur naphtalène lithium, naphtalène sodium, naphtalène potassium et leurs homologues.

**10.** Système d'amorçage selon l'une des revendications 1 à 3 dans lequel l'amorceur est difonctionnel et est le produit de réaction de deux équivalents d'amorceur organomonolithié sur le 1,3-diisopropénylbenzène.

**11.** Système d'amorçage selon l'une des revendications 1 à 3 dans lequel l'amorceur est un composé silylé.

**12.** Système d'amorçage selon la revendication 11, dans lequel l'amorceur silylé est monofonctionnel et de formule IV :

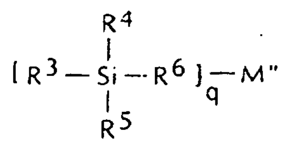

(IV)

dans laquelle :

- $R^3$, $R^4$, $R^5$ représentent, chacun, indépendamment, un radical alkyle, linéaire ou ramifié, contenant 1 à 8 atomes de carbone ;
- R6 représente un radical alkylène linéaire ou ramifié, contenant 1 à 8 atomes de carbone ;
- M" désigne un métal alcalin ou alcalino-terreux (valence q de 1 ou 2).

**13.** Système d'amorçage selon la revendication 11, dans lequel l'amorceur silylé est difonctionnel et de formule V :

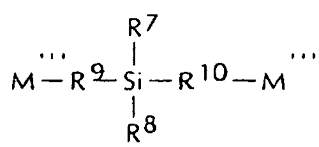

(V)

dans laquelle :

- $R^7$ et $R^8$ représentent, chacun, indépendamment, un radical alkyle, linéaire ou ramifié, contenant 1 à 8 atomes de carbone ;
- $R^9$ et $R^{10}$ représentent, chacun, indépendamment, un radical alkylène, linéaire ou ramifié, contenant 1 à 8 atomes de carbone ; et
- M"' désigne un métal alcalin.

**14.** Procédé de polymérisation anionique de monomères (méth)acryliques et, éventuellement de monomères à insaturation(s) éthylénique(s) copolymérisables avec les monomères (méth)acryliques **caractérisé en ce que** la polymérisation est réalisée en présence d'un système d'amorçage selon l'une des revendications 1 à 13

**15.** Procédé selon la revendication 14, **caractérisé en ce que** la polymérisation est réalisée à une température de -100°C à + 100°C, de préférence à une température inférieure à -20°C pour les acrylates et à +30°C pour les méthacrylates.

**16.** Procédé selon l'une des revendications 14 et 15, **caractérisé par le fait qu'**il est conduit dans au moins un solvant

aprotique.

**17.** Procédé selon la revendication 16, **caractérisé par le fait que** le solvant est choisi parmi le benzène, le toluène, l'éthylbenzène, le tétrahydrofuranne, le diglyme, le tétraglyme, l'orthoterphényle, le biphényle, la décaline, la tétraline ou leurs mélanges.

**18.** Procédé selon l'une des revendications 14 à 17, **caractérisé par le fait qu'**il est conduit pendant une durée inférieure à 30 minutes.

**19.** Procédé selon l'une des revendications 14 à 18, **caractérisé par le fait que** les monomères (méth)acryliques sont choisis parmi les (méth)acrylates des formules respectivement :

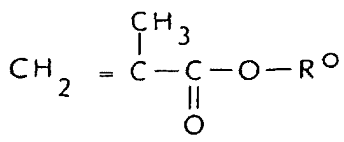

et

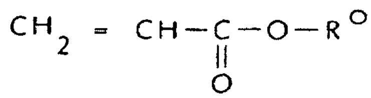

dans lesquelles R° est choisi parmi les radicaux alkyle en $C_1$-$C_{18}$, linéaires ou ramifiés, primaires, secondaires ou tertiaires, cycloalkyle en $C_5$-$C_{18}$, alcoxy-alkyle et alkylthioalkyle dans lesquels les groupes alkyle, linéaires ou ramifiés, ont de 1 à 8 atomes de carbone, aryle et arylalkyle, ces radicaux étant éventuellement substitués par au moins un atome de fluor et/ou au moins un groupe hydroxyle après protection de ce groupe hydroxyle ; les (méth) acrylates de glycidyle, de norbornyle, d'isobornyle, les mono- et di-(alkyl en $C_1$-$C_{18}$)-(méth)acrylamides.

**20.** Procédé selon la revendication 19 **caractérisé par le fait que** les monomères méthacryliques sont choisis parmi les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle.

**21.** Procédé selon la revendication 19, **caractérisé par le fait que** les monomères acryliques sont choisis parmi les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

**22.** Procédé conforme à l'une des revendications 14 à 18, **caractérisé en ce que** les monomères copolymérisables avec les monomères (méth)acryliques sont choisis dans ce groupe formé par les monomères vinylaromatiques, éventuellement halogenés ou substitués, les monomères diéniques, les monomères vinylidéniques, les monomères oléfiniques, les vinyl-2 et vinyl-4 pyridines, vinylsilanes, vinylaldehydes, vinylcétones, vinylsulfoxydes, alkylcyanoacrylates et les monomères hétérocycliques.

**23.** Procédé conforme à l'une des revendications 14 à 22, **caractérisé en ce que** la polymérisation est réalisée dans des conditions adiabatiques.

**24.** Procédé selon l'une des revendications 14 à 23, **caractérisé par le fait qu'**on polymérise du méthacrylate de méthyle en présence d'un solvant apolaire ou majoritairement apolaire.

**25.** Procédé selon l'une des revendications 14 à 24, **caractérisé par le fait qu'**il conduit à un poly(méthacrylate de méthyle) ayant une masse molaire moyenne en nombre comprise entre 200 et $10^6$ g/mole et un indice de polymolécularité Ip ($\overline{Mw}/\overline{Mn}$) compris entre 1,05 et 2,6.

**26.** Procédé selon l'une des revendications 24 ou 25, **caractérisé en ce que** l'on obtient un poly(méthacrylate de méthyle) ayant un taux de triades syndiotactiques supérieur à 70 %.

**27.** Procédé selon l'une des revendications 14 à 19, **caractérisé en ce qu'**il conduit à un polymère d'acrylate d'éthyle ayant une masse molaire moyenne en nombre comprise entre 500 et 500 000 g/mole et un indice de polymolécularité Ip ($\overline{Mw}/\overline{Mn}$) compris entre 1,05 et 2,6.

## Patentansprüche

1. Inititatorsystem zur anionischen Polymerisation von mindestens einem (Meth)Acryl-Monomer und gegebenenfalls (einem) Monomer(en) mit ethylenische(r/n) Ungesättigtheit(en), das/die mit diese(m/n) Monomer(en) copolymerisierbar ist/sind, umfassend mindestens einen Initiator, ausgenommen Alkalimetallamide, und mindestens ein Alkoholat der Formel ROM (I),
wobei:

   - M ein Alkalimetall darstellt und
   - R eine Gruppe

   $$Q—R^1—(OR^2—)_m$$

   darstellt, wobei:

   - Q einen Heterocyclus mit 5 oder 6 Gliedern darstellt, der 1 oder 2 Sauerstoffatome als einzige(s) Heteroatom (e) umfasst und unsubstituiert oder durch einen Alkylrest mit 1 bis 8 Kohlenstoffatomen, ein $C_5$- bis $C_8$-Cycloalkyl substituiert ist oder substituiert ist durch oder kondensiert ist mit einem Heterocyclus mit 5 oder 6 Gliedern, der 1 oder 2 Heteroatome umfasst;
   - $R^1$ und $R^2$, die identisch oder verschieden sind, jeweils einen geradkettigen oder verzweigten $C_1$- bis $C_4$-Alkylenrest darstellen, wobei $R^1$ mit dem Heterocyclus Q in $\alpha$-Stellung über ein Sauerstoffatom verbunden ist,
   - m gleich 0, 1, 2 oder 3 ist, **dadurch gekennzeichnet, dass** das Molverhältnis Alkoholat/Initiator zwischen 1 und 20 beträgt.

2. Initiatorsystem nach Anspruch 1, wobei der Ligand die Formel I besitzt, wobei:

   - Q aus der Gruppe ausgewählt ist, bestehend aus Tetrahydrofuranyl-2-, 5-Methyltetrahydrofuranyl-2-, Tetrahydropyranyl-2-, 1,3-Dioxolanyl-2-, 1,3-Dioxolanyl-5-, 1,3-Dioxanyl-2-, 1,3-Dioxanyl-6-, 1,4-Dioxanyl-2-, 1,4-Dioxaspiro-[4,5]-decan-2-yl, 1,7-Dioxaspiro-[5,5]-undecan-2-yl, 1,5,7,11-Tetraoxaspiro-[5,5]-undecan-2-yl,
   - $R^1$ und $R^2$ Methylen-, Ethylen-, Butylen-, Propylen- oder Isopropylengruppen sind,
   - m gleich 0, 1 oder 2 ist,
   - M Lithium darstellt.

3. Initiatorsystem nach Anspruch 2, wobei der Ligand Lithiumtetrahydrofuranyl-2-methoxylat oder -2-ethoxylat ist.

4. Initiatorsystem nach einem der Ansprüche 1 bis 3, wobei der Initiator monofunktionell ist und der Formel (R')p-M' (II) entspricht, wobei

   - M' ein Alkali- oder Erdalkalimetall (Wertigkeit p von 1 oder 2) darstellt und
   - R' einen geradkettigen oder verzweigten Alkylrest mit 2 bis 8 Kohlenstoffatomen oder einen Arylrest mit einem oder mehreren gegebenenfalls substituierten Ringen oder einen $C_2$- bis $C_6$-Alkenylrest, der durch einen Aryl- oder Alkylarylrest substituiert ist, oder einen geradkettigen oder verzweigten Alkylrest mit 1 bis 8 Kohlenstoffatomen, der durch mindestens eine Phenylgruppe substituiert ist, oder einen Alkylarylrest, dessen Alkylrest 1 bis 8 Kohlenstoffatome besitzt, darstellt.

5. Initiatorsystem nach Anspruch 4, wobei der monofunktionelle Initiator aus sek.-Butyllithium, n-Butyllithium, Fluorenyllithium, Alphamethylstyryllithium, 1,1-Diphenylhexyllithium, Diphenylmethyllithium oder -natrium oder -kalium und 1,1-Diphenyl-3-methylpentyllithium ausgewählt ist.

6. Initiatorsystem nach einem der Ansprüche 1 bis 3, wobei der Initiator monofunktionell und eine Verbindung unter den $\alpha$-Lithioisobutyraten ist.

7. Initiatorsystem nach einem der Ansprüche 1 bis 3, wobei der Initiator bifunktionell ist und der Formel III entspricht:

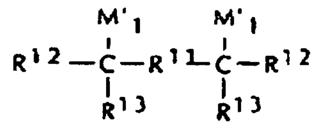 (III)

wobei:

- $M'_1$ ein Alkalimetall darstellt und
- $R^{11}$ einen zweiwertigen, aliphatischen, cycloaliphatischen, aromatischen organischen Rest oder einen Rest, der mindestens einen cycloaliphatischen oder aromatischen Rest trägt, darstellt, wobei $R^{11}$ Substituenten tragen kann,
- $R^{12}$ und $R^{13}$ jeweils unabhängig einen einwertigen, aliphatischen, cycloaliphatischen, aromatischen organischen Rest oder einen Rest, der mindestens einen cycloaliphatischen oder aromatischen Rest trägt, darstellt, wobei $R^{12}$ und $R^{13}$ Substituenten tragen können.

**8.** Initiatorsystem nach Anspruch 7, wobei der Initiator aus der Gruppe ausgewählt ist, bestehend aus 1,1,4,4,-Tetraphenyl-1,4-dilithiobutan, 1,1,4,4-Tetraphenyl-1,4-diisobutan.

**9.** Initiatorsystem nach einem der Ansprüche 1 bis 3, wobei der Initiator bifunktionell ist und aus den Initiatorvorläufern von Naphthalinlithium, Naphthalinnatrium, Naphthalinkalium und Homologen davon ausgewählt ist.

**10.** Initiatorsystem nach einem der Ansprüche 1 bis 3, wobei der Initiator bifunktionell ist und das Produkt der Umsetzung von zwei Äquivalenten Organomonolithium-Initiator mit 1,3-Diisopropenylbenzol ist.

**11.** Initiatorsystem nach einem der Ansprüche 1 bis 3, wobei der Initiator eine Silylverbindung ist.

**12.** Initiatorsystem nach Anspruch 11, wobei der Silyl-Initiator monofunktionell ist und die Formel IV besitzt:

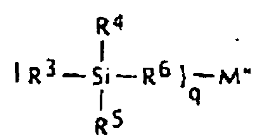 (IV)

wobei

- $R^3$, $R^4$, $R^5$ jeweils unabhängig einen geradkettigen oder verzweigten Alkylrest mit 1 bis 8 Kohlenstoffatomen darstellen,
- $R^6$ einen geradkettigen oder verzweigten Alkylenrest mit 1 bis 8 Kohlenstoffatomen darstellt,
- M" ein Alkali- oder Erdalkalimetall (Wertigkeit q von 1 oder 2) darstellt.

**13.** Initiatorsystem nach Anspruch 11, wobei der Silyl-Initiator bifunktionell ist und die Formel V besitzt:

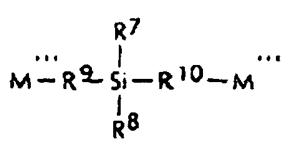 (V)

wobei

- $R^7$ und $R^8$ jeweils unabhängig einen geradkettigen oder verzweigten Alkylrest mit 1 bis 8 Kohlenstoffatomen

darstellen,

- $R^9$ und $R^{10}$ jeweils unabhängig einen geradkettigen oder verzweigten Alkylenrest mit 1 bis 8 Kohlenstoffatomen darstellen,
- M''' ein Alkalimetall darstellt.

**14.** Verfahren zur anionischen Polymerisation von (Meth)Acryl-Monomeren und gegebenenfalls Monomeren mit ethylenische(r/n) Ungesättigtheit(en), die mit den (Meth)Acryl-Monomeren copolymerisierbar sind, **dadurch gekennzeichnet, dass** die Polymerisation in Gegenwart eines Initiatorsystems nach einem der Ansprüche 1 bis 13 durchgeführt wird.

**15.** Verfahren nach Anspruch 14, **dadurch gekennzeichnet, dass** die Polymerisation bei einer Temperatur von -100°C bis +100°C, vorzugsweise bei einer Temperatur unter -20°C für die Acrylate und unter +30°C für die Methacrylate, durchgeführt wird.

**16.** Verfahren nach einem der Ansprüche 14 und 15, **dadurch gekennzeichnet, dass** es in mindestens einem aprotischen Lösungsmittel durchgeführt wird.

**17.** Verfahren nach Anspruch 16, **dadurch gekennzeichnet, dass** das Lösungsmittel aus Benzol, Toluol, Ethylbenzol, Tetrahydrofuran, Diglym, Tetraglym, Orthoterphenyl, Biphenyl, Dekalin, Tetralin oder Gemischen davon ausgewählt ist.

**18.** Verfahren nach einem der Ansprüche 14 bis 17, **dadurch gekennzeichnet, dass** es für einen Zeitraum von weniger als 30 Minuten durchgeführt wird.

**19.** Verfahren nach einem der Ansprüche 14 bis 18, **dadurch gekennzeichnet, dass** die (Meth)Acryl-Monomere aus den (Meth)Acrylaten der Formeln

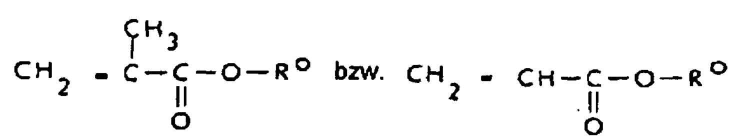

wobei $R^0$ aus geradkettigen oder verzweigten, primären, sekundären oder tertiären $C_1$- bis $C_{18}$-Alkyl-, $C_5$- bis $C_{18}$-Cycloalkyl- Alkoxyalkyl- und Alkylthioalkyl-, wobei die geradkettigen oder verzweigten Alkylreste 1 bis 8 Kohlenstoffatome besitzen, Aryl- und Arylalkylresten ausgewählt ist, wobei diese Reste gegebenenfalls durch mindestens ein Fluoratom und/oder mindestens eine Hydroxylgruppe nach Schützen dieser Hydroxylgruppe substituiert sind, Glycidyl-, Norbornyl-, Isobornyl(meth)acrylaten, Mono- und Di-($C_1$-$C_8$alkyl)-(meth)acrylamiden ausgewählt sind.

**20.** Verfahren nach Anspruch 19, **dadurch gekennzeichnet, dass** die Methacrylmonomere ausgewählt sind aus Methyl-, Ethyl-, 2,2,2-Trifluorethyl-, n-Propyl-, Isopropyl,- n-Butyl-, sek.-Butyl-, tert.-Butyl-, n-Amyl-, i-Amyl-, n-Hexyl-, 2-Ethylhexyl-, Cyclohexyl-, Octyl-, i-Octyl-, Nonyl-, Decyl-, Lauryl-, Stearyl-, Phenyl-, Benzyl-, β-Hydroxyethyl-, Isobornyl-, Hydroxypropyl-, Hydroxybutylmethacrylaten.

**21.** Verfahren nach Anspruch 19, **dadurch gekennzeichnet, dass** die Acrylmonomere ausgewählt sind aus Methyl-, Ethyl-, n-Propyl-, Isopropyl,- n-Butyl-, sek.-Butyl-, tert.-Butyl-, Hexyl-, 2-Ethylhexyl-, Isooctyl-, 3,3,5-Trimethylhexyl-, Nonyl-, Isodecyl-, Lauryl-, Octadecyl-, Cyclohexyl-, Phenyl-, Methoxymethyl-, Methoxyethyl-, Ethoxymethyl- und Ethoxyethylacrylaten.

**22.** Verfahren nach einem der Ansprüche 14 bis 18, **dadurch gekennzeichnet, dass** die mit den (Meth)acryl-Monomeren copolymerisierbaren Monomere ausgewählt sind aus der Gruppe, bestehend aus gegebenenfalls halogenierten oder substituierten vinylaromatischen Monomeren, Dienmonomeren, Vinylidenmonomeren, olefinischen Monomeren, Vinyl-2- und Vinyl-4-pyridinen, Vinylsilanen, Vinylaldehyden, Vinylketonen, Vinylsulfoxiden, Alkylcyanoacrylaten und heterocyclischen Monomeren.

**23.** Verfahren nach einem der Ansprüche 14 bis 22, **dadurch gekennzeichnet, dass** die Polymerisation unter adiabatischen Bedingungen durchgeführt wird.

**24.** Verfahren nach einem der Ansprüche 14 bis 23, **dadurch gekennzeichnet, dass** Methylmethacrylat in Gegenwart eines apolaren oder größtenteils apolaren Lösungsmittels polymerisiert wird.

**25.** Verfahren nach einem der Ansprüche 14 bis 24, **dadurch gekennzeichnet, dass** es zu einem Poly(methylmethacrylat) mit einer zahlengemittelten Molmasse zwischen 200 und $10^6$ g/mol und einem Polymolekulariätsindex $I_p$ (Mw/Mn) zwischen 1,05 und 2,6 führt.

**26.** Verfahren nach einem der Ansprüche 24 oder 25, **dadurch gekennzeichnet, dass** ein Poly(methylmethacrylat) mit einem Anteil an syndiotaktischen Triaden von mehr als 70% erhalten wird.

**27.** Verfahren nach einem der Ansprüche 14 bis 19, **dadurch gekennzeichnet, dass** es zu einem Ethylacrylatpolymer mit einer zahlengemittelten Molmasse zwischen 500 und 500 000 g/mol und einem Polymolekulariätsindex $I_p$ (Mw/Mn) zwischen 1,05 und 2,6 führt.

## Claims

**1.** Initiation system for the anionic polymerization of at least one (meth)acrylic monomer and optionally of monomer(s) comprising ethylenic unsaturation(s) which can be copolymerized with this/these monomer(s), comprising at least one initiator with the exception of alkali metal amides and at least one alkoxide of formula ROM (I)
in which:

- M represents an alkali metal and
- R represents a group

$$Q\text{-}R^1\text{-}(OR^2\text{-})_m$$

in which:
- Q represents a 5- or 6-membered heterocycle comprising 1 or 2 oxygen atoms as sole heteroatom(s) which is unsubstituted or substituted by an alkyl group having from 1 to 8 carbon atoms or a $C_5$-$C_8$ cycloalkyl or substituted by or condensed with a heterocycle having from 5 to 8 ring members comprising 1 or 2 heteroatoms;
- $R^1$ and $R^2$, which are identical or different, each represent a linear or branched $C_1$-$C_4$ alkylene group, $R^1$ being bonded to the heterocycle Q in the $\alpha$ position with respect to an oxygen atom,
- m is equal to 0, 1, 2 or 3, **characterized in that** the alkoxide/initiator molar ratio is between 1 and 20.

**2.** Initiation system according to Claim 1, in which the ligand has the formula (I) in which:

- Q is chosen from the group formed by tetrahydrofuran-2-yl-, 5-methyltetrahydrofuran-2-yl-, tetrahydropyran-2-yl-, 1,3-dioxolan-2-yl-, 1,3-dioxolan-5-yl-, 1,3-dioxan-2-yl-, 1,3-dioxan-6-yl-, 1,4-dioxan-2-yl-, 1,4-dioxaspiro[4.5]decan-2-yl-, 1,7-dioxaspiro[5.5]-undecan-2-yl- and 1,5,7,11-tetraoxaspiro[5.5]undecan-2-yl-,
- $R^1$ and $R^2$ are methylene, ethylene, butylene, propylene or isopropylene groups,
- m is equal to 0, 1 or 2,
- M is lithium.

**3.** Initiation system according to Claim 2, in which the ligand is lithium tetrahydrofuran-2-ylmethoxide or lithium tetrahydrofuran-2-ylethoxide.

**4.** Initiation system according to one of Claims 1 to 3, in which the initiator is monofunctional and corresponds to the formula $(R')_pM'$ (II), in which:

- M' denotes an alkali metal or alkaline earth metal (valency p of 1 or 2); and
- R' denotes an alkyl radical with a straight or branched chain comprising 2 to 8 carbon atoms, or an aryl radical with one or more rings which is/are optionally substituted, or else a $C_2$-$C_6$ alkenyl radical substituted by an aryl or alkylaryl group, or else a linear or branched alkyl radical comprising 1 to 8 carbon atoms substituted by at least one phenyl group, or else an alkylaryl radical in which the alkyl group has from 1 to 8 carbon atoms.

**5.** Initiation system according to Claim 4, in which the monofunctional initiator is chosen from sec-butyllithium, n-butyllithium, fluorenyllithium, α-methylstyryllithium, 1,1-diphenylhexyllithium, diphenylmethyllithuium or -sodium or -potassium and 1,1-diphenyl-3-methylpentyllithium.

6. Initiation system according to one of Claims 1 to 3, in which the initiator is monofunctional and is a compound chosen from α-lithioisobutyrates.

7. Initiation system according to one of Claims 1 to 3, **characterized in that** the initiator is difunctional and corresponds to the formula (III):

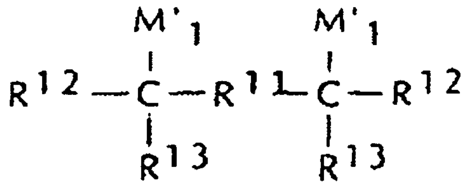

(III)

in which:

- $M'_1$ is an alkali metal; and
- $R^{11}$ represents an aliphatic, cycloaliphatic or aromatic divalent organic radical or a divalent organic radical comprising at least one cycloaliphatic or aromatic group, it being possible for $R^{11}$ to comprise substituents;
- $R^{12}$ and $R^{13}$ each independently represent an aliphatic, cycloaliphatic or aromatic monovalent organic radical or a monovalent organic radical comprising at least one cycloaliphatic or aromatic group, it being possible for $R^{12}$ and $R^{13}$ to comprise substituents.

8. Initiation system according to Claim 7, in which the initiator is chosen from the group formed by 1,1,4,4-tetraphenyl-1,4-dilithiobutane and 1,1,4,4-tetraphenyl-1,4-disodiobutane.

9. Initiation system according to one of Claims 1 to 3, in which the initiator is difunctional and is chosen from the following precursors of initiators: naphthalene lithium, naphthalene sodium, naphthalene potassium and their homologues.

10. Initiation system according to one of Claims 1 to 3, in which the initiator is difunctional and is the reaction product of two equivalents of organomonolithiated initiator with 1,3-diisopropenyl-benzene.

11. Initiation system according to one of Claims 1 to 3, in which the initiator is a silylated compound.

12. Initiation system according to Claim 11, in which the silylated initiator is monofunctional and of formula (IV):

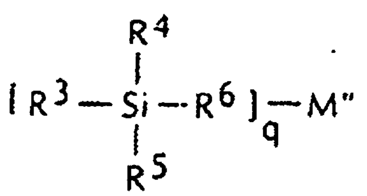

(IV)

in which:

- $R^3$, $R^4$ and $R^5$ each independently represent a linear or branched alkyl radical comprising 1 to 8 carbon atoms;
- $R^6$ represents a linear or branched alkylene radical comprising 1 to 8 carbon atoms;
- M" denotes an alkali metal or alkaline earth metal (valency q of 1 or 2).

13. Initiation system according to Claim 11, in which the silylated initiator is difunctional and of formula (V) :

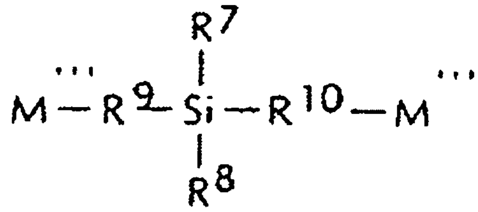 (V)

in which:

- $R^7$ and $R^8$ each independently represent a linear or branched alkyl radical comprising 1 to 8 carbon atoms;
- $R^9$ and $R^{10}$ each independently represent a linear or branched alkylene radical comprising 1 to 8 carbon atoms; and
- M□ denotes an alkali metal.

**14.** Process for the anionic polymerization of (meth)acrylic monomers and optionally of monomers comprising ethylenic unsaturation(s) which can be copolymerized with the (meth)acrylic monomers, **characterized in that** the polymerization is carried out in the presence of an initiation system according to one of Claims 1 to 13.

**15.** Process according to Claim 14, **characterized in that** the polymerization is carried out at a temperature of -100°C to +100°C, preferably at a temperature of less than -20°C for acrylates and of less than +30°C for methacrylates.

**16.** Process according to either of Claims 14 and 15, **characterized in that** it is carried out in at least one aprotic solvent.

**17.** Process according to Claim 16, **characterized in that** the solvent is chosen from benzene, toluene, ethylbenzene, tetrahydrofuran, diglyme, tetraglyme, ortho-terphenyl, biphenyl, decalin, tetralin or their mixtures.

**18.** Process according to one of Claims 14 to 17, **characterized in that** it is carried out for a time of less than 30 minutes.

**19.** Process according to one of Claims 14 to 18, **characterized in that** the (meth)acrylic monomers are chosen from (meth)acrylates with the formulae respectively:

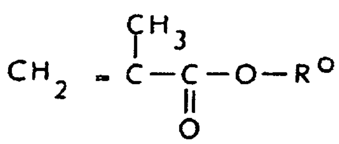 and 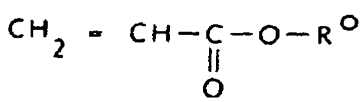

in which $R^o$ is chosen from linear or branched and primary, secondary or tertiary $C_1$-$C_{18}$ alkyl radicals, $C_5$-$C_{18}$ cycloalkyl radicals, alkoxyalkyl and alkylthioalkyl radicals in which the linear or branched alkyl groups have from 1 to 8 carbon atoms, aryl radicals and arylalkyl radicals, these radicals optionally being substituted by at least one fluorine atom and/or at least one hydroxyl group after protection of this hydroxyl group; glycidyl, norbornyl or isobornyl (meth)acrylates or mono- and di($C_1$-$C_{18}$ alkyl)(meth)acrylamides.

**20.** Process according to Claim 19, **characterized in that** the methacrylic monomers are chosen from methyl, ethyl, 2,2,2-trifluoroethyl, n-propyl, isopropyl, n-butyl, sec-butyl, tert-butyl, n-amyl, isoamyl, n-hexyl, 2-ethylhexyl, cyclohexyl, octyl, isooctyl, nonyl, decyl, lauryl, stearyl, phenyl, benzyl, β-hydroxyethyl, isobornyl, hydroxypropyl or hydroxybutyl methacrylate.

**21.** Process according to Claim 19, **characterized in that** the acrylic monomers are chosen from methyl, ethyl, n-propyl, isopropyl, n-butyl, sec-butyl, tert-butyl, hexyl, 2-ethylhexyl, isooctyl, 3,3,5-trimethylhexyl, nonyl, isodecyl, lauryl, octadecyl, cyclohexyl, phenyl, methoxymethyl, methoxyethyl, ethoxymethyl or ethoxyethyl acrylate.

**22.** Process in accordance with one of Claims 14 to 18, **characterized in that** the monomers which can be copolymerized with the (meth)acrylic monomers are chosen from the group formed by vinylaromatic monomers, which are optionally halogenated or substituted, diene monomers, vinylidene monomers, olefinic monomers, 2-vinyl- and

4-vinylpyridines, vinylsilanes, vinylaldehydes, vinyl ketones, vinyl sulphoxides, alkyl cyanoacrylates and heterocyclic monomers.

**23.** Process in accordance with one of Claims 14 to 22, **characterized in that** the polymerization is carried out under adiabatic conditions.

**24.** Process according to one of Claims 14 to 23, **characterized in that** methyl methacrylate is polymerized in the presence of a nonpolar or predominantly nonpolar solvent.

**25.** Process according to one of Claims 14 to 24, **characterized in that** it results in a poly(methyl methacrylate) having a number-average molar mass of between 200 and $10^6$ g/mol and a polydispersity index PI ($\overline{Mw}/\overline{Mn}$) of between 1.05 and 2.6.

**26.** Process according to either of Claims 24 and 25, **characterized in that** a poly(methyl methacrylate) is obtained which has a level of syndiotactic triads of greater than 70%.

**27.** Process according to one of Claims 14 to 19, **characterized in that** it results in an ethyl acrylate polymer having a number-average molar mass of between 500 and 500 000 g/mol and a polydispersity index PI ($\overline{Mw}/\overline{Mn}$) of between 1.05 and 2.6.